# EUROPEAN PATENT APPLICATION

(11) **EP 1 190 995 A1**
(43) Date of publication of application: **27.03.2002**
(21) Application number: 99961291.4
(22) Date of filing: 10.12.1999
(51) Int. Cl.: C03C 12/00, C01B 13/14, B09B 3/00, C02F 11/06, E04F 11/06, E04F 15/04, C04B 35/00, C08J 5/00

(54) **NONCRYSTALLINE POWDER, COMPOSITE HARDENED PRODUCT AND COMPOSITE BUILDING MATERIAL**

(30) Priority: 11.12.1998 JP 35258698; 12.02.1999 JP 3468799
(71) Applicant: IBIDEN CO., LTD., Ogaki-shi Gifu-ken 503-0917 (JP)
(72) Inventor: MATSUNO, Yoshimi, Ibiden Co., Ltd, Ibi-gun, Gifu 501-0695 (JP); OGAWA, Tetsuji, Ibiden Co., Ltd, Ibi-gun, Gifu 501-0695 (JP); SATOU, Kenji, Ibiden Co., Ltd, Ibi-gun, Gifu 501-0695 (JP); NOMURA, Toshihiro, Ibiden Co., Ltd, Ibi-gun, Gifu 501-0695 (JP)
(74) Representative: Hill, Christopher Michael
(86) International application number: JP9906969
(87) International publication number: WO0035820

(57) **Abstract**

This invention renders an amorphous powder usable as a starting material for various industrial materials into a structure including an amorphous body consisting of two or more oxide system and is made possible to produce composite hardened bodies and building materials having an excellent bending strength by using the amorphous powder as a starting material without damaging the workability and productivity.

## Description

### TECHNICAL FIELD

This invention relates to amorphous powder usable as a starting material for various industrial materials and a composite hardened body and a composite building material using the same.

### BACKGROUND ART

Recently, it is examined to effectively utilize various industrial wastes from a viewpoint of the protection of earth environment. For example, in the building industry consuming forest resources on a massive scale, there is made a proposal that the consumption amount of the forest resources can be suppressed by newly providing a building material from the industrial wastes but also the cost can be reduced and the functions can be improved in inorganic boards usually used such as calcium silicate board, perlite plate, slag plaster plate, wooden cement plate, plaster board and the like.

For instance, JP-A-7-41350 discloses that pulp dregs created after the production of papers (scum) are effectively utilized as a building panel. According to this technique, inorganic substances obtained by firing the scum such as silica, alumina and the like are mixed with cement, fibers and water and then contact with a porous iron plate under pressure.

In JP-A-10-218643 is disclosed a cement admixture including a waste liquid slug.

In the technique disclosed in JP-A-7-41350, however, the iron plate and cement are used, so that there are problems that the workability is poor and the productivity lowers because it is required to conduct curing of cement. And also, the fired product of scum disclosed is crystalline because it is heated at 800-1000°C, so that the cement using such a fired product has a problem that the bending strength and shock resistance are poor.

In the technique disclosed in JP-A-10-218643, the specific surface area is 2000-15000 cm²/g, so that even if powder having such a low specific surface area is tightened with a binder, there is a problem that the compression strength and bending strength are low. That is, when the industrial waste is applied to pillar member, plate member or the like, it is required to increase the bending strength.

Further, the cement is used even in all of the techniques, so that nails or the like can not be struck, and if the nail is forcibly struck, there is a disadvantage of causing the occurrence of crack.

### DISCLOSURE OF INVENTION

It is, therefore, an object of the invention to solve the aforementioned problems and to provide a composite hardened body improving the bending strength and a composite building material using such a composite hardened body together with amorphous powder suitable as a starting material therefor.

That is, the gist and construction of the invention are the following items 1-53.
1. Amorphous powder characterized by including an amorphous body of two or more oxides.
2. Amorphous powder according to the item 1, wherein the oxide is Al₂O₃, SiO₂, CaO, Na₂O, MgO, P₂O₅, SO₃, K₂O, TiO₂, MnO, Fe₂O₃ or ZnO.
3. Amorphous powder characterized by comprising an amorphous body including at least two elements selected from Al, Si, Ca, Na, Mg, P, S, K, Ti, Mn, Fe and Zn.
4. Amorphous powder according to the item 1, 2 or 3, wherein a specific surface area of the powder is 1.6-200 m²/g.
5. Amorphous powder characterized by including an Al₂O₃-SiO₂-CaO based amorphous body.
6. Amorphous powder characterized by including an Al₂O₃-SiO₂-CaO-oxide based amorphous body.
7. Amorphous powder according to the item 6, wherein the oxide is at least one selected from Na₂O, MgO, P₂O₅, SO₃, K₂O, TiO₂, MnO, Fe₂O₃ and ZnO.
8. Amorphous powder according to any one of the items 1 to 7, wherein the amorphous body has a composition converted into each of Al₂O₃, SiO₂ and CaO that Al₂O₃: 5-51% by weight per total weight of the amorphous powder, SiO₂: 8-53% by weight per total weight of the amorphous powder and CaO: 10-63% by weight per total weight of the amorphous powder, and a sum of three oxides does not exceeds 100% by weight.
9. Amorphous powder according to any one of the items 1 to 8, which further contains a halogen.
10. Amorphous powder according to any one of the items 1 to 9, which further has a crystal body.
11. Amorphous powder characterized by including an amorphous body in which at least two elements selected from Al, Si, Ca, Na, Mg, P, S, K, Ti, Mn, Fe and Zn are confirmed to be existent by a fluorescent X-ray analysis and a harrow is observed within a range of 2θ: 15°-40° by an X-ray diffraction analysis.
12. Amorphous powder characterized by comprising an amorphous body in which Al, Si and Ca are confirmed to be existent by a fluorescent X-ray analysis and a harrow is observed within a range of 2θ: 15°-40° by an X-ray diffraction analysis.
13. Amorphous powder characterized by comprising an amorphous body in which Al, Si and Ca are confirmed to be existent by a fluorescent X-ray analysis and further at least one element selected from Na, Mg, P, S, K, Ti, Mn, Fe and Zn is confirmed to be existent by the fluorescent X-ray analysis and a harrow is observed within a range of 2θ: 15°-40° by an X-ray diffraction analysis.
14. Amorphous powder characterized by firing a paper-making sludge as an industrial waste.
15. Amorphous powder characterized by firing a paper-making sludge as an industrial waste at not lower than 300°C but lower than 800°C.
16. A composite hardened body comprising amorphous powder as described in any one of the items 1 to 15 and a binder.
17. A composite hardened body comprising amorphous powder as described in any one of the items 1 to 15, a binder and fibrous materials. Moreover, it is desirable that the fibrous materials are oriented, i.e. longitudinal directions of the fibers are aligned in a particular direction.
18. A composite hardened body according to the item 17, wherein the fibrous material is an organic fibrous material consisting of a polysaccharide.
19. A composite hardened body according to any one of the items 1 to 18, which further contains inorganic powder.
20. A composite building material comprising a reinforcing layer formed on at least one surface of a core material, in which a composite hardened body as described in any one of the items 16 to 19 is applied to said core material.
21. Inorganic amorphous powder consisting of an inorganic amorphous body, wherein the inorganic amorphous body contains Fe and has a specific surface area of 1.6-200 m²/g.
22. Inorganic amorphous powder according to the item 21, wherein a content of Fe in the inorganic amorphous body is 0.1-30% by weight per total weight of the inorganic amorphous powder as converted to Fe₂O₃.
23. Inorganic amorphous powder according to the item 22, wherein the inorganic amorphous powder is used as a coloring matter.
24. Inorganic amorphous powder according to any one of the items 21 to 23, wherein the inorganic amorphous body contains at least two elements selected from Al, Si, Ca, Na, Mg, P, S, K, Ti, Mn and Zn.
25. Inorganic amorphous powder according to any one of the items 21 to 24, wherein the inorganic amorphous body consists of two or more oxides, and the oxide is at least one selected from Na₂O, MgO, P₂O₅, SO₃, K₂O, TiO₂, MnO, Fe₂O₃ and ZnO.
26. Inorganic amorphous powder according to any one of the items 21 to 25, wherein the inorganic amorphous body has a specific gravity of 2.2-3.0.
27. Inorganic amorphous powder according to any one of the items 21 to 26, wherein the inorganic amorphous body has the following composition converted into each of Al₂O₃, SiO₂ and CaO.
   Al₂O₃: 5-51% by weight per total weight of the inorganic amorphous powder,
   SiO₂: 8-53% by weight per total weight of the inorganic amorphous powder,
   CaO: 10-63% by weight per total weight of the inorganic amorphous powder,
   provided that a sum of Al₂O₃, SiO₂ and CaO does not exceeds 100% by weight.
28. Inorganic amorphous powder according to any one of the items 21 to 27, wherein the inorganic amorphous body is obtained by firing a paper-making sludge as an industrial waste.
29. Inorganic amorphous powder according to any one of the items 21 to 28, which further contains a halogen.
30. A composite hardened body comprising inorganic amorphous powder as described in any one of the items 21 to 29 and a binder.
31. A composite hardened body comprising inorganic amorphous powder as described in any one of the items 21 to 29, a binder and fibrous materials.
32. A composite hardened body according to the item 31, wherein the fibrous materials are organic fibrous materials consisting of a polysaccharide.
33. A composite hardened body according to the item 31 or 32, wherein the fibrous materials are oriented in a particular direction.
34. A composite building material comprising a reinforcing layer formed on at least one surface of a core material, in which the core material consists of a composite hardened body as described in any one of the items 30 to 33.
35. Inorganic amorphous powder comprising an inorganic amorphous body, in which a crystal body is included in the inorganic amorphous body.
36. Inorganic amorphous powder comprising an inorganic amorphous body, in which a crystal body containing Ca is included in the inorganic amorphous body.
37. Inorganic amorphous powder according to the item 35 or 36, wherein a specific surface area of the inorganic amorphous powder is 1.6-200 m²/g.
38. Inorganic amorphous powder according to any one of the items 35 to 37, wherein the inorganic amorphous body contains at least two or more elements selected from Al, Si, Ca, Na, Mg, P, S, K, Ti, Mn, Fe and Zn.
39. Inorganic amorphous powder according to any one of the items 35 to 38, wherein the inorganic amorphous body consists of two or more oxides, and the oxide is selected from Al₂O₃, SiO₂, CaO, Na₂O, MgO, P₂O₅, SO₃, K₂O, TiO₂, MnO, Fe₂O₃ and ZnO.
40. Inorganic amorphous powder according to any one of the items 35 to 39, wherein the inorganic amorphous powder has a specific gravity of 2.2-3.0.
41. Inorganic amorphous body according to any one of the items 35 to 40, wherein the inorganic amorphous body has the following composition converted into each of Al₂O₃, SiO₂ and CaO.
   Al₂O₃: 5-51% by weight per total weight of the inorganic amorphous powder,
   SiO₂: 8-53% by weight per total weight of the inorganic amorphous powder,
   CaO: 10-63% by weight per total weight of the inorganic amorphous powder,
   provided that a sum of Al₂O₃, SiO₂ and CaO does not exceeds 100% by weight.
42. Inorganic amorphous powder according to any one of the items 35 to 41, wherein the inorganic amorphous body contains a halogen.
43. A composite hardened body comprising inorganic amorphous powder as described in any one of the items 35 to 42 and a binder.
44. A composite hardened body comprising inorganic amorphous powder as described in any one of the items 35 to 42, a binder and fibrous materials.
45. A composite hardened body according to the item 44, wherein the fibrous materials are organic fibrous materials consisting of a polysaccharide.
46. A composite hardened body according to the item 44 or 45, wherein the fibrous materials are oriented in a particular direction.
47. A composite building material comprising a reinforcing layer formed on at least one surface of a core material, in which the core material is a composite hardened body as described in any one of the items 43 to 46.
48. Amorphous powder comprising porous powder including an inorganic amorphous body and having a specific surface area of 1.6-200 m²/g.
49. Amorphous powder comprising porous powder including an inorganic amorphous body comprised of two or more oxides and having a specific surface area of 1.6-200 m²/g.
50. A composite hardened body comprising amorphous powder as described in the item 48 or 49 and a binder.
51. A composite hardened body comprising amorphous powder as described in the item 48 or 49, a binder and fibrous materials.
52. A composite hardened body according to the item 51, wherein the fibrous materials are oriented.
53. A composite building material comprising a reinforcing layer formed on at least one surface of a core material, in which a composite hardened body as described in any one of the items 50 to 52 is applied to said core material.

The amorphous powder according to the invention is fundamental to include an amorphous body consisting of two or more oxide system. The term "amorphous body consisting of two or more oxide system" used herein means an amorphous body of oxide (1)-oxide (2) .... - oxide (n) system (wherein n is a natural number, and oxide (1), oxide (2) ... oxide (n) are different oxides).

Such an amorphous body is difficult to be correctly defined, but is considered to be an amorphous compound produced by subjecting two or more oxides to a solid solution, a hydration reaction or the like. In such an amorphous compound, elements constituting the oxide (at least two selected from Al, Si, Ca, Na, Mg, P, S, K, Ti, Mn, Fe and Zn) are confirmed by a fluorescent X-ray analysis, and a harrow is observed within a range of 2θ: 15°-40° in a chart by an X-ray diffraction analysis. This harrow is a gentle undulation of X-ray intensity, which is observed as a broad upheavement in the X-ray chart. Moreover, a half-width value of the harrow is 2θ: not less than 2°.

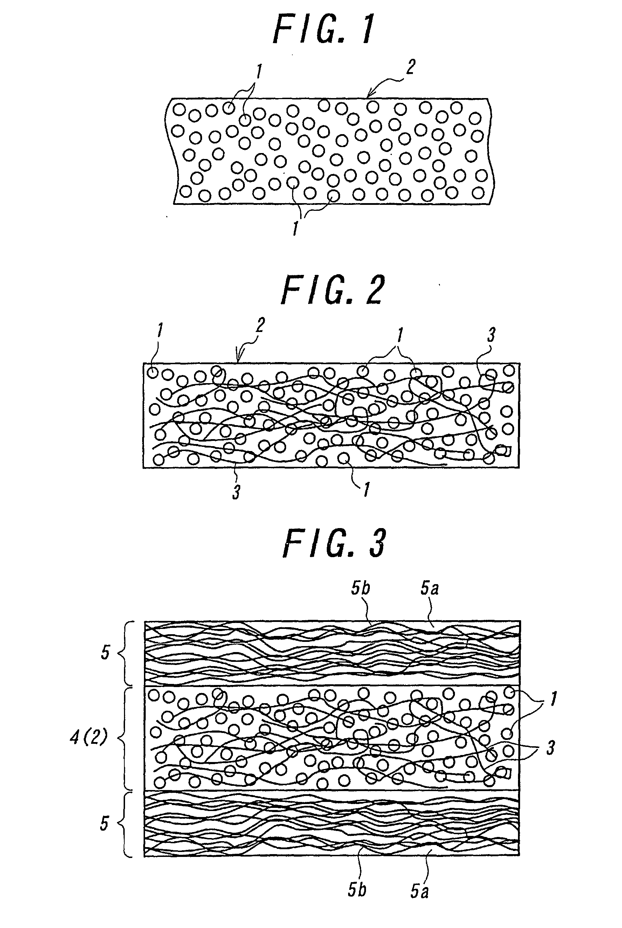

As shown in Fig. 1, a composite hardened body 2 of bound amorphous powder 1 is obtained by binding the amorphous powder including the above amorphous body with a binder. The composite hardened body 2 is an effective strength-developing substance because the amorphous powder 1 is higher in the strength and toughness than a crystal body, and hence there is obtained a homogeneous hardened body in which the values of compression strength and bending strength are improved and there is no anisotropy in the strength. Furthermore, since it is an amorphous body, there is a merit that the sufficient strength is obtained at a low density, and hence a light composite hardened body is obtained by binding with the binder.

And also, as shown in Fig. 2, it is possible to improve a value of toughness at break in the composite hardened body 2 by including fibrous materials 3 into the composite hardened body 2 shown in Fig. 1.

As the amorphous powder 1 for the composite hardened body 2, it is favorable to use powder having an average particle size of 1-100 µm. When the average particle size is outside the above range, the composite hardened body having sufficient strength and toughness is not obtained.

Moreover, the reason why the amorphous body changes into a strength-developing substance is not clear, but it is guessed that the growth of crack is obstructed as compared with the crystalline structure. Further, the fibrous materials are easy to be uniformly dispersed in the amorphous body as compared with the crystal body, so that it is considered to improve the value of toughness at break. As a result, crack is not created even when a nail is struck or a through-hole is formed, so that the composite hardened body becomes optimum as a material requiring works such as building material or the like.

As the oxide may be used oxides of metal and/or non-metal, which is desirable to be selected from Al₂O₃, SiO₂, CaO, Na₂O, MgO, P₂O₅, SO₃, K₂O, TiO₂, MnO, Fe₂O₃ and ZnO. Especially, an amorphous body of Al₂O₃-SiO₂-CaO system or Al₂O₃-SiO₂-CaO-oxide system, or a composite of these amorphous bodies is optimum. Moreover, the oxide in the latter amorphous body is one or more oxides of metal and/or non-metal other than Al₂O₃, SiO₂ and CaO.

Firstly, the amorphous body of Al₂O₃-SiO₂-CaO system is a compound having an amorphous structure produced by subjecting a whole or a part of each of Al₂O₃, SiO₂ and CaO to solid solution, hydration reaction or the like. That is, it is considered to include either of compounds produced by subjecting a combination of Al₂O₃ and SiO₂, SiO₂ and CaO, Al₂O₃ and CaO or Al₂O₃, SiO₂ and CaO to solid solution, hydration reaction or the like.

In such an inorganic amorphous compound, Al, Si and Ca are confirmed by a fluorescent X-ray analysis, and a harrow is observed within a range of 2θ: 15°-40° in a chart by an X-ray diffraction analysis. This harrow is a gentle undulation of X-ray intensity, which is observed as a broad upheavement in the X-ray chart. Moreover, a half-width value of the harrow is 2θ: not less than 2°.

And also, the amorphous body of a system added with at least one oxide in addition to Al₂O₃, SiO₂ and CaO, i.e. Al₂O₃-SiO₂-CaO- oxide system is considered to include either of compounds produced by subjecting a combination of Al₂O₃ and oxide, SiO₂ and oxide, CaO and oxide, Al₂O₃, SiO₂ and oxide, SiO₂, CaO and oxide, Al₂O₃, CaO and oxide or Al₂O₃, SiO₂, CaO and oxide in addition to the above combination in Al₂O₃-SiO₂-CaO system to solid solution, hydration reaction or the like.

Moreover, in case of the amorphous body of two or more oxides or Al₂O₃-SiO₂-CaO-oxide (1) .....- oxide (n) system (n is a natural number of not less than 2), it is considered to include either of compounds produced by subjecting a combination of these oxides, for example, at least two oxides selected from oxide (1), oxide (2) oxide (n) (n is a natural number of not less than 2, and oxide (n) means different oxide when the value of n is different and excludes Al₂O₃, SiO₂ and CaO) to solid solution, hydration reaction or the like, compounds produced by subjecting a combination of at least two selected from Al₂O₃, SiO₂ and CaO to solid solution, hydration reaction or the like, and further compounds produced by subjecting a combination of at least one selected from oxide (1), oxide (2) .... oxide (n) (n is a natural number of not less than 2) and at least one selected from Al₂O₃, SiO₂ and CaO to solid solution, hydration reaction or the like.

In such an inorganic amorphous compound, Al, Si, Ca and further elements constituting the oxide (two or more selected from Na, Mg, P, S, K, Ti, Mn, Fe and Zn) are confirmed by a fluorescent X-ray analysis, and a harrow is observed within a range of 2θ: 15°-40° in a chart by an X-ray diffraction analysis. This harrow is a gentle undulation of X-ray intensity, which is observed as a broad upheavement in the X-ray chart. Moreover, a half-width value of the harrow is 2θ: not less than 2°.

In this case, the oxide to be combined with Al₂O₃, SiO₂ and CaO is one or more and can use oxide of metal and/or non-metal other than Al₂O₃, SiO₂ and CaO. For example, there can be selected from Na₂O, MgO, P₂O₅, SO₃, K₂O, TiO₂, MnO, Fe₂O₃ and ZnO. This selection can be carried out based on properties expected in the composite hardened body.

For instance, Na₂O or K₂O can be removed with an alkali or the like, so that when the removal treatment is carried out prior to a plating treatment, the surface of the composite hardened body to be plated can be roughened to act as an anchor for plating.

MgO contributes to develop strength as a solid solution with Al₂O₃, SiO₂ and CaO to largely improve the bending strength and shock resistance.

P₂O₅ is particularly useful when being used as a biological material (dental implant, artificial bone) for assisting an adhesion to bone.

SO₃ is suitable as an antibacterial building material because it has an antibacterial property.

TiO₂ is a white coloring matter and acts as a photo-oxidation catalyst, so that an adhered organic contaminant substance can be forcibly oxidized and cleaned only by irradiating a light. Therefore, it has a peculiar effect capable of using as a self-cleanable building material or various filters or a reaction catalyst.

MnO is useful as a darkish coloring matter, and Fe₂O₃ is useful as a bright coloring matter, and ZnO is a white coloring matter.

Moreover, these oxides may be existent in the amorphous body alone.

The above amorphous body is preferable to have a composition converted into each of Al₂O₃, SiO₂ and CaO that Al₂O₃: 5-51% by weight per total weight of the composite hardened body, SiO₂: 8-53% by weight per total weight of the composite hardened body and CaO: 10-63% by weight per total weight of the composite hardened body, and a sum of three oxides does not exceeds 100% by weight.

Because, when the content of Al₂O₃ is less than 5% by weight or exceeds 51% by weight, the strength of the composite hardened body lowers, while even when the content of SiO₂ is less than 8% by weight or exceeds 53% by weight, the strength of the composite hardened body lowers. And also, when the content of CaO is less than 10% by weight or exceeds 63% by weight, the strength of the composite hardened body also lowers.

Further, in order to obtain a hardened body having a higher strength, it is advantageous to adjust a ratio of CaO/SiO₂ to 0.2-7.9 and a ratio of CaO/Al₂O₃ to 0.2-12.5, respectively, as converted into oxide.

When one or more of Na₂O, MgO, P₂O₅, SO₃, K₂O, TiO₂, MnO, Fe₂O₃ and ZnO are included as an oxide other than Al₂O₃, SiO₂ and CaO, a preferable content of each oxide is as follows. It is needless to say that the total content of these oxides does not exceeds 100% by weight.
- Na₂O:: 0.1-2.4% by weight per total weight of the amorphous powder
- MgO:: 0.3-22.0% by weight per total weight of the amorphous powder
- P₂O₅:: 0.1-14.6% by weight per total weight of the amorphous powder
- SO₃:: 0.1-7.0% by weight per total weight of the amorphous powder
- K₂O:: 0.1-2.4% by weight per total weight of the amorphous powder
- TiO₂:: 0.1-17.4% by weight per total weight of the amorphous powder
- MnO:: 0.1-3.0% by weight per total weight of the amorphous powder
- Fe₂O₃:: 0.2-35.6% by weight per total weight of the amorphous powder
- ZnO:: 0.1-3.6% by weight per total weight of the amorphous powder

The reason why the contents of these oxides are limited to the above ranges is due to the fact that when they are outside the above ranges, the strength of the composite hardened body lowers.

It can be confirmed whether or not the compound has an amorphous structure by an X-ray diffractometry. That is, when a harrow is observed in a zone of 2θ: 15°-40° by the X-ray diffractometry, the compound can be confirmed to have an amorphous structure. In the invention, a crystal body may be included in the amorphous structure in addition to the complete amorphous structure. Concretely, there may be included hydrogen aluminum silicate, kaolinite, zeolite, gehlenite,syn, anorthite, melitite, gehlenite-synthetic, tobermorite, xonotlite or ettringite; or an oxide such as SiO₂, Al₂O₃, CaO, Na₂O, MgO, P₂O₅, SO₃, K₂O, TiO₂, MnO, Fe₂O₃, ZnO or the like.

Although these crystal bodies themselves are not considered to be a strength-developing substance, they are considered to have an effect that hardness and density are increased to improve the compression strength or to control the growth of crack, or the like. Moreover, the content of the crystal body is desirable to be 0.1-50% by weight per total weight of the amorphous powder. Because, when the crystal body is too small, the above effect is not obtained, while when it is too large, the strength lowers.

Incidentally, the crystalline compound of Al₂O₃-SiO₂ system is hydrogen aluminum silicate, kaolinite or zeolite, and the crystalline compound of Al₂O₃-CaO system is calcium aluminate, and the crystalline compound of CaO-SiO₂ system is calcium silicate, and the crystalline compound of Al₂O₃-SiO₂-CaO system is gehlenite,syn or anorthite, and the crystalline compound of Al₂O₃-SiO₂-CaO-MgO system is melitite or gehlenite-synthetic.

Further, the crystal body is desirable to contain Ca, and may include gehlenite,syn (Ca₂Al₂O₇), melitite-synthetic {Ca₂(Mg_{0.5}Al_{0.5})(Si_{1.5}Al_{0.5}O₇)}, gehlenite-synthetic {Ca₂(Mg_{0.25}Al_{0.75}Al_{0.752})(Si_{1.25}Al_{0.75}O₇)}, anorthite,ordered (Ca₂Al₂Si₂O₈), or calcium carbonate (calcite). Because, Ca can enhance the strength.

In the amorphous powder according to the invention, a halogen may be added to the amorphous body consisting of two or more oxides. This halogen serves as a catalyst in the reaction of forming a solid solution or a hydrate and also acts as a combustion controlling substance. The content is desirable to be 0.1-1.2% by weight per total weight of the amorphous body. Because, when it is less than 0.1% by weight, the strength is low, while when it exceeds 1.2% by weight, harmful substances are created by combustion. As the halogen, chlorine, bromine and fluorine are desirable.

Similarly, calcium carbonate (calcite) may be added. Calcium carbonate itself is not a strength-developing substance, but is considered to contribute to the increase of the strength because calcium carbonate is surrounded with the amorphous body to prevent the growth of crack or the like. The content of calcium carbonate is desirable to be not more than 48% by weight per total weight of the amorphous body, because when it exceeds 48% by weight, the bending strength lowers. And also, it is desirable to be not less than 0.1% by weight. When the content is less than 0.1% by weight, it does not contribute to the increase of the strength.

The amorphous powder according to the invention is desirable to have a specific surface area of 1.6-200 m²/g. When the composite hardened body is produced by binding the amorphous powder with the binder, if the specific surface area of the powder is less than 1.6 m²/g, the contact area between the binder and the powder is too small and the compression strength and bending strength lower, while if it exceeds 200 m²/g, the powder becomes too fine and the compression strength and bending strength still lower. Therefore, the specific surface area of the amorphous powder is adjusted to the above range, whereby there is obtained the composite hardened body having excellent compression strength and bending strength. And also, a specific gravity of the amorphous powder is favorable to be within a range of 2.2-3.0 because when it is less than 2.2, the hardness and strength becomes lower, while when it exceeds 3.0, the powder becomes brittle and the strength still lowers.

The above amorphous powder is used in various industries and can be applied, for example, to filler for decorative plate, raw material for inorganic board, filter material, column filler for chromatography, catalyst carrier, raw material for artificial bone, material for artificial limb, filler for sealing resin of electronic parts, filler for resist composition or the like.

As the amorphous powder, there are recommended ones obtained by firing an industrial waste, and one obtained by firing a paper-making sludge (scum) is particularly optimum. That is, the paper-making sludge is a pulp dreg containing inorganic mass, and is low in the cost for using the industrial waste as a starting material, and contributes to the solution of environmental problems.

The paper-making sludge is desirable to be fired at not lower than 300°C but lower than 800°C. That is, it is easily rendered into a crystalline body above 800°C, while the pulp is carbonized at lower than 300°C and the powder is not obtained. And also, the amorphous structure can be obtained by firing the paper-making sludge at 300-1500°C and the quenching.

In general, the paper-making sludge contains water and at least one selected from oxides and hydroxides of Al, Si, Ca, Na, Mg, P, S, K, Ti, Mn, Fe and Zn or a sol as a precursor thereof, or a composite thereof, halogen and calcium carbonate in addition to the pulp. Especially, the wastepaper of high-grade paper contains a great amount of calcium based crystal such as kaoline, calcium carbonate or the like, so that a sludge containing a great amount of the wastepaper is suitable as the paper-making sludge.

Moreover, the water content in the paper-making sludge is desirable to be 20-80% by weight. When the water content is less than 20% by weight, the sludge is too hard and the shaping thereof is difficult, while when it exceeds 80% by weight, the sludge is rendered into a slurry and the shaping thereof is difficult.

The composite hardened body according to the invention will be described below.

As previously mentioned, the composite hardened body according to the invention is characterized by comprising the amorphous powder and the binder and further adding fibrous materials, if necessary.

The binder used herein is desirable to be either a thermosetting resin or an inorganic binding agent or both. As the thermosetting resin, at least one resin selected from phenolic resin, melamine resin, epoxy resin and urea resin is desirable. As the inorganic binding agent, at least one selected from sodium silicate, silica gel and alumina sol is desirable. Furthermore, an unfired paper-making sludge may be used as the binder.

The fibrous material included in the composite hardened body may be either organic or inorganic. As the organic fibrous material, at least one selected from chemical fibers such as vinylon, polypropylene, polyethylene and the like and organic fibrous material consisting of a polysaccharide can be used, but the organic fibrous material consisting of a polysaccharide is desirable. Because, the polysaccharide has OH group and easily bonds to various compounds such as Al₂O₃, SiO₂, CaO and the like through hydrogen bonding.

The polysaccharide is desirable to be at least one compound selected from amino sugar, uronic acid, starch, glycogen, inulin, lichenin, cellulose, chitin, chitosan, hemicellulose and pectin. As the organic fibrous material consisting of these polysaccharides, pulp, pulp dreg, pulverized mass of a wastepaper such as news paper, magazine or the like are advantageously adaptable.

Moreover, the pulp contains about 10-30% by weight of lignin in addition to cellulose.

On the other hand, at least one selected from alumina whisker, SiC whisker, silica-alumina based ceramic fiber, glass fiber, carbon fiber and metal fiber can be used as the inorganic fibrous material.

Moreover, the content of the fibrous material is desirable to be 2-75% by weight per total weight of the composite hardened body. When the content is less than 2% by weight, the strength of the composite hardened body lowers, while when it exceeds 75% by weight, there is feared the lowering of fire protecting property, water resistance, dimension stability and the like.

Furthermore, an average length of the fibrous material is desirable to be 10-3000 µm. When the average length is too short, the entanglement is not caused, while when it is too long, gap is apt to be created to lower the strength of the inorganic hardened body.

On the other hand, the content of the amorphous powder in the composite hardened body is favorable to be 10-90% by weight per total weight of the composite hardened body. Because, when the content of the amorphous powder is outside the above range, the desired strength is not obtained.

Further, inorganic powder may be added to the composite hardened body in addition to the amorphous powder. Concretely, use may be made of at least one selected from calcium carbonate, calcium hydroxide, white sand, white sand balloon, perlite, aluminum hydroxide, silica, alumina, talc, calcium carbonate and industrial waste powder. As the industrial waste powder, it is particularly desirable to use at least one industrial waste powder selected from fired powder of the paper-making sludge, polished dust of glass and pulverized dust of silica sand. Because, the use of these industrial waste powders can realize the reduction of the cost and further contribute to the solution of environmental problems.

The above composite hardened body is utilized in various industries and can be used in new building materials instead of calcium silicate board, perlite board, plywood; gypsum board and the like as well as medical materials such as artificial limb, artificial bone, dental plant and electronic materials such as core substrate for printed wiring board, interlaminar resin insulating layer and the like.

The invention will be described with respect to composite building materials as an application example of the composite hardened body below.

Namely, as shown in Fig. 3, in a composite building material wherein a reinforcing layer 5 is formed on at least one-side surface of a core material 4, both surfaces thereof in the illustrated embodiment, the composite hardened body 2 according to the invention is applied to the core material 4. That is, when the core material 4 is made of the composite hardened body 2 according to the invention, even if tensile force is applied to the core material, the breakage is not easily caused because the core material itself is excellent in the bending strength and the reinforcing layer is disposed on the surface of the core material. And also, even if pressure is locally applied to the surface, there is not created dent or depression.

In the use of the composite building material according to the invention, a decorative layer is formed on the reinforcing layer 6 by painting or through a decorative plate, a decorative panel or the like, so that the shock resistance is improved, and the damage such as dent or the like hardly occurs and the decorative face is not strained by the damage to cause no lowering of designing property.

And also, the reinforcing layer 5 has a structure of embedding fiber-based materials 5b in a resin 5a. As the resin 5a, it is particularly desirable to use a thermosetting resin. Because, the thermosetting resin is excellent in the fire resistance and is not softened even at a higher temperature as compared with a thermoplastic resin and does not lose the function as the reinforcing layer. As the thermosetting resin, a phenolic resin, a melamine resin, an epoxy resin, a polyimide resin, a urea resin or the like is adaptable. In order to give sufficient stiffness and shock resistance and higher fire resistance to the reinforcing layer, the content of the thermosetting resin in the reinforcing layer is desirable to be within a range of 10% by weight to 65% by weight.

And also, the thermosetting resin, for example, at least one thermosetting resin selected from phenolic resin, melamine resin, epoxy resin, urea resin and urethane resin may be applied onto the surface of the core material 4.

On the other hand, inorganic fibers are desirable to be used as the fiber-based material 5b. Because, they can increase the strength of the reinforcing layer 5 and reduce the thermal expansion coefficient thereof. As the inorganic fiber, use may be made of glass fiber, rock wool and ceramic fiber, which are low in the cost and excellent in the heat resistance and strength. As the fiber-based material, matt-shaped product of discontinuous fibers, matt-shaped product formed by cutting continuous long fibers to 3-7 cm (so-called chopped strand matt), sheet-shaped product after the dispersion in water, matt-shaped product by laminating continuous long fiber in an eddy form, or a woven product of continuous long fiber can be used.

Further, the thickness of the reinforcing layer is desirable to be 0.2 mm - 3.5 mm. When it is set to the above range, sufficient stiffness and shock resistance are obtained, and a high workability can be maintained. Moreover, a fire retardant such as aluminum hydroxide, magnesium hydroxide or the like, and a usually used inorganic binding agent such as silica sol, alumina sol, water glass or the like may be added to the reinforcing layer.

There are described production methods of the amorphous powder, composite hardened body and composite building material according to the invention below.

At first, the production method of the amorphous powder is as follows.

There is provided a paper-making sludge as a starting material. As the paper-making sludge, it is desirable to use a paper-making sludge discharged in the paper-making of printing-information paper, kraft paper, titanium paper, facial paper, tissue paper, toilet paper, sanitary paper, toweling paper, various industrial papers or various domestic papers. As a commercially available paper-making sludge, there can be used "Green sludge" and the like handled by Maruto Yozai-sha.

After the drying, the paper-making sludge is fired at not lower than 300°C but lower than 800°C for 30 minutes to 10 hours and the fired sludge is pulverized in a ball mill, a mixer or the like, whereby the amorphous powder according to the invention can be obtained.

Then, the production method of the composite hardened body is described. That is, the above amorphous powder is mixed with a binder and, if necessary, fibrous materials to prepare a starting mixture. In case of using an unfired paper-making sludge, since the sludge contains inorganic mass and pulp, it can be mixed with the binder and the fibrous material, so that it is advantageous. Such a starting mixture is shaped into a desired form by a method of pressing to remove water after being poured into a desired molding frame or a molding frame provided with a filter-like bottom plate, or a method of paper-making a slurry of the starting mixture. Then, the thus shaped body is dried and hardened at a heating temperature of 20-160°C to obtain a composite hardened body. When the heating temperature is too high, deformation, cracking or the like is caused, while when it is too low, a long time is taken in the drying and the productivity lowers.

Especially, in order to shape the composite hardened body into a plate, the paper-making sludge is pushed by rolls while transferring through a conveyor to form a sheet-shaped body, and then the thus sheet-shaped body is heated at a heating temperature of 80-160°C while press-tightening to form a plate-shaped core material. In this case, a pressure is suitable to be 1-20 kgf/cm². The term "press-tightening" used herein means the holding under pressure. By the pressure applied in the press-tightening are oriented the fibrous materials in a direction crossing to the pressure applying direction, so that the bending strength of the core material can be increased. And also, water is removed by pressurization to control the progress of crystallization, so that the press-tightening is advantageous for the formation of the amorphous body.

Further, after the inorganic powder is mixed with the paper-making sludge, they are hardened by heating, whereby the inorganic powder can be dispersed into the composite hardened body.

Moreover, a metal alkoxide or a metal hydroxide can be used as a starting material in addition to the paper-making sludge. For example, a mixture of alkoxides or hydroxides of Al, Si, Ca is mixed with a pulverized material of wastepaper and subjected to hydrolysis and polymerization reactions in the presence of an acid or an alkali to form a sol, and then the sol can be gelated by drying and hardening.

The thus obtained gel is guessed to be the same as a compound obtained by subjecting an oxide(s) of Al₂O₃, SiO₂, CaO, Na₂O, MgO, P₂O₅, SO₃, K₂O, TiO₂, MnO, Fe₂O₃, ZnO and the like to solid solution or hydration reaction.

Incidentally, techniques using the paper-making sludge are found here and there, but they are different from the invention in the technical idea. That is, JP-A-49-86438 discloses a technique of mixing and hot-pressing a pulp dreg (cellulose component) and a lime dreg, but the pulp dreg means a cellulose and does not correspond to the utilization of inorganic component in the paper-making sludge as defined in the invention and the dispersion of fibers in the inorganic amorphous body. Therefore, breakage is caused at the grain boundary of the lime dreg or the growth of crack can not be prevented, and there is remained a problem in the bending strength and compression strength. And also, the lime dreg is a crystalline body (calcium oxide) obtained by burning a paper-making pulp solution, which is clearly distinguished from the amorphous body according to the invention.

JP-A-7-47537, JP-A-7-69701, JP-A-6-293546 and JP-A-5-270872 are a composite technique of cement and inorganic reinforcing fibers, and JP-A-10-15923 is a technique of mixing a pulp sludge with a crystalline gypsum, and JP-A-49-2880 is a technique aiming at only fibers in the pulp waste, and JP-A-53-81388 discloses that fibers in the pulp dreg (fiber 20%, earth and sand 0.01%) are mixed with wood chips and shaped, respectively, which are different from the dispersion of fibrous materials into the inorganic amorphous body as defined in the invention.

JP-A-51-30088 is a technique of shaping a fired ash of a pulp waste and a light inorganic material, but the firing conditions and the like are not described and an amorphous fired ash can not bed obtained. JP-A-8-246400 is a technique of using wastepaper pulp itself instead of the paper-making sludge. JP-A-48-44349 is a technique of mixing a pulp waste containing organic mass and inorganic mass with a high polymer emulsion or the like, but the inorganic mass means silicon oxide, aluminum oxide and iron oxide and indicates substantially a metal oxide of each kind, which is different from a complicated amorphous system of two or more metal oxides as defined in the invention. JP-A-49-99524 is a ceramic formed substrate (polycrystalline body), which is different from the amorphous system as defined in the invention.

And also, the composite building material is produced as follows.

Firstly, the paper-making sludge is pushed by rolls while transferring through a conveyor to form a sheet-shaped body. On the other hand, a resin is impregnated in a fibrous material, subjected to a heating treatment at 25-70°C and dried to form a reinforcing sheet. Then, the sheet-shaped body and the reinforcing sheet are laminated and press-tightened by heating to form a composite building material consisting of a core material (composite hardened body) and a reinforcing layer. In this case, the heating temperature is 80-200°C, and the pressure is about 1-20 kgf/cm².

By such a press-tightening are oriented the fibrous materials, whereby the bending strength can be increased, while water can be removed by the pressurization, so that there can be prevented the excessive progress of crystallization due to the entrapment of water.

Moreover, a method wherein a resin composition is impregnated in a matt of inorganic fibers and dried and hot pressed to cure a thermosetting resin to thereby form a reinforcing layer and then the resulting reinforcing layer is adhered to a previously hardened core material with an adhesive can be used instead of the above production method.

And also, there can be adopted a method wherein a thermosetting resin such as a phenolic resin or the like is separately coated onto surfaces of fibers such as glass fiber, rock wool or ceramic fiber and a fibrous material comprised of these fibers is laminated on a sheet-shaped body and then hot pressed. In the method of coating the thermosetting resin on the fiber surfaces at a separate step, the adhesion property to the impregnated resin is improved, and also the fibers are easily adhered with each other and further the impregnating ratio of the resin can advantageously be improved. As such a coating method, there are a method wherein an uncured thermosetting resin is impregnated into the fibrous materials and then dried, and a method wherein a starting melt for glass fiber, rock wool or ceramic fiber is discharged through a nozzle and fibered through a blowing process or a centrifugal process and at the same time a solution of a thermosetting resin such as phenolic resin or the like is sprayed thereto.

Moreover, when the glass fiber, rock wool or ceramic fiber is used as a substance constituting the fibrous material, it is favorable to coat a silane coupling agent. The thus obtained composite building material may be subjected to a painting on its front and rear surfaces, or may be adhered with a decorative plate, a decorative panel or the like through an adhesive.

The painting is carried out by printing or spraying various pigments, an ink or the like. As the decorative plate, use may be made of a decorative plate of three layer structure consisting of a phenolic resin impregnated core layer, a melamine resin impregnated pattern layer and a melamine resin impregnated overlay layer, and a decorative plate of four layer structure consisting of a melamine resin impregnated backer layer, a phenolic resin impregnated core layer, a melamine resin impregnated pattern layer and a melamine resin impregnated overlay layer. Particularly, the decorative plate having the phenolic resin impregnated core layer as a core layer can be applied to a floor member or the like because the surface strength becomes considerably high.

As the decorative panel, high-grade woods of cryptomeria, cypress and the like can be used.

### BRIEF DESCRIPTION OF THE DRAWINGS

Fig. 1 is a diagrammatically section view of an embodiment of the composite hardened body according to the invention.
Fig. 2 is a diagrammatically section view of an embodiment of the composite hardened body according to the invention.
Fig. 3 is a diagrammatically section view of an embodiment of the composite building material according to the invention.
Fig. 4 is an X-ray diffraction chart of each of amorphous powders of Examples 1-1, 2-1, 3-1 and 4-1.

### BEST MODE FOR CARRYING OUT THE INVENTION

### [Example 1]

### (Example 1-1)

1512 g of an unfired paper-making sludge ("Green sludge" handled by Maruto Yozai-sha, solid content: 34% by weight, water content: 66% by weight) is dried at 80°C with stirring, and the dried mass is fired at 780°C for 5 hours and immediately quenched to room temperature. Further, the fired body is pulverized in a ball mill for 5 hours to obtain 248 g of an amorphous powder.

This amorphous powder is confirmed to have the following composition as converted to oxides as a result of an analysis using a fluorescent X-ray analyzing apparatus (RIX2100, made by Rigaku). Moreover, the specific surface area is measured according to JIS R-1626 (BET method: one-point process of fluidization method).

| Account | | | |
|---|---|---|---|
| SiO₂ | 34.1% by weight | Fe₂O₃ | 1.6% by weight |
| CaO | 32.1% by weight | TiO₂ | 1.0% by weight |
| Al₂O₃ | 20.7% by weight | SO₃ | 0.5% by weight |
| MgO | 5.9% by weight | Cl | 0.2% by weight |
| P₂O₅ | 2.8% by weight | ZnO | 0.1% by weight |
| | | Others slight | |
| Average particle size: 11.0 µm | | | |
| True specific gravity: 2.756 | | | |
| Specific surface area: 19.0 m²/g | | | |

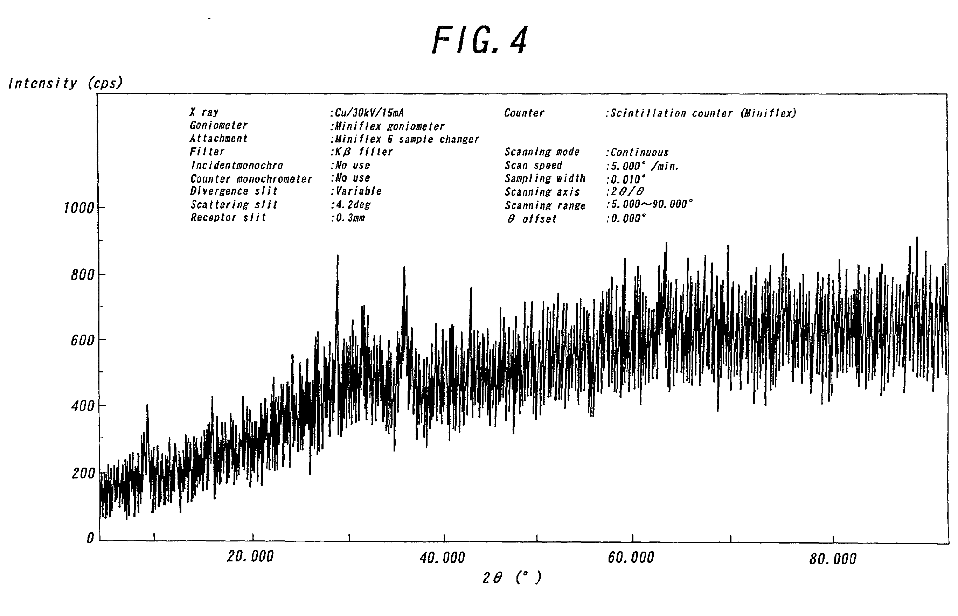

And also, the crystalline structure is confirmed by an X-ray diffractometry. The X-ray diffraction chart is shown in Fig. 4. Moreover, the X-ray diffractometry is carried out by using MiniFlex made by Rigaku and Cu as a target. It is ascertained that the crystalline structure is included in the amorphous structure because a gentle undulation (harrow) is observed about 2θ: 22° and a peak indicating the crystalline structure is also observed. And also, Gehlenite,syn, Melitite-synthetic, Gehlenite-synthetic, Anorthite,ordered are identified from the peaks. The existing content of crystal is about 20% by weight to the powder.

Then, 248 parts by weight of the thus obtained amorphous powder is kneaded with 1512 parts by weight of an unfired paper-making sludge, and a pressure of 3 kgf/cm² is applied while transferring the kneaded body through a conveyor to form a sheet-shaped body having a thickness of 10 mm. The sheet-shaped body is heated at 100°C to form a plate-shaped composite hardened body.

Moreover, when a side face of the composite hardened body is observed by means of an optical microscope (50 magnification), the fibers are oriented in a direction perpendicular to the pressure applying direction.

### (Example 1-2)

The fired product obtained in Example 1-1 is pulverized in a ball mill for 10 hours to obtain 248 g of an amorphous powder. This amorphous powder is confirmed to have the following composition as converted to oxides as a result of an analysis using a fluorescent X-ray analyzing apparatus (RIX2100, made by Rigaku).

| Account | | | |
|---|---|---|---|
| SiO₂ | 34.1% by weight | Fe₂O₃ | 1.6% by weight |
| CaO | 32.1% by weight | TiO₂ | 1.0% by weight |
| Al₂O₃ | 20.7% by weight | SO₃ | 0.5% by weight |
| MgO | 5.9% by weight | Cl | 0.2% by weight |
| P₂O₅ | 2.8% by weight | ZnO | 0.1% by weight |
| | | Others slight | |
| Average particle size: 6.6 µm | | | |
| True specific gravity: 2.756 | | | |
| Specific surface area: 31.7 m²/g | | | |

Then, 248 parts by weight of the thus obtained amorphous powder is kneaded with 1512 parts by weight of an unfired paper-making sludge, and a pressure of 3 kgf/cm² is applied while transferring the kneaded mass through a conveyor to form a sheet-shaped body having a thickness of 10 mm. The sheet-shaped body is heated at 100°C to form a plate-shaped composite hardened body.

### (Example 1-3)

The fired product obtained in Example 1-1 is pulverized in a ball mill for 3 hours to obtain 248 g of an amorphous powder. This amorphous powder is confirmed to have the following composition as converted to oxides as a result of an analysis using a fluorescent X-ray analyzing apparatus (RIX2100, made by Rigaku).

| Account | | | |
|---|---|---|---|
| SiO₂ | 34.0% by weight | Fe₂O₃ | 12.6% by weight |
| CaO | 32.1% by weight | TiO₂ | 1.0% by weight |
| Al₂O₃ | 20.7% by weight | SO₃ | 0.5% by weight |
| MgO | 6.0% by weight | Cl | 0.2% by weight |
| P₂O₅ | 2.7% by weight | ZnO | 0.1% by weight |
| | | Others slight | |
| Average particle size: 17.6 µm | | | |
| True specific gravity: 2.756 | | | |
| Specific surface area: 4.8 m²/g | | | |

Then, 248 parts by weight of the thus obtained amorphous powder is kneaded with 1512 parts by weight of an unfired paper-making sludge, and a pressure of 3 kgf/cm² is applied while transferring the kneaded mass through a conveyor to form a sheet-shaped body having a thickness of 10 mm. The sheet-shaped body is heated at 100°C to form a plate-shaped composite hardened body.

### (Example 1-4)

The amorphous powder obtained by pulverizing in the ball mill in Example 1-1 is further pulverized in a ball mill for 30 hours to obtain 248 g of an amorphous powder. This amorphous powder is confirmed to have the following composition as converted to oxides as a result of an analysis using a fluorescent X-ray analyzing apparatus (RIX2100, made by Rigaku).

| Account | | | |
|---|---|---|---|
| SiO₂ | 34.0% by weight | Fe₂O₃ | 12.6% by weight |
| CaO | 32.1% by weight | TiO₂ | 1.0% by weight |
| Al₂O₃ | 20.7% by weight | SO₃ | 0.5% by weight |
| MgO | 6.0% by weight | Cl | 0.2% by weight |
| P₂O₅ | 2.7% by weight | ZnO | 0.1% by weight |
| | | Others slight | |
| Average particle size: 1.5 µm | | | |
| True specific gravity: 2.756 | | | |
| Specific surface area: 139 m²/g | | | |

Then, 248 parts by weight of the thus obtained amorphous powder is kneaded with 1512 parts by weight of an unfired paper-making sludge, and a pressure of 3 kgf/cm² is applied while transferring the kneaded mass through a conveyor to form a sheet-shaped body having a thickness of 10 mm. The sheet-shaped body is heated at 100°C to form a plate-shaped composite hardened body.

### (Example 1-5)

The amorphous powder obtained by pulverizing in the ball mill in Example 1-1 is further pulverized in a ball mill for 48 hours to obtain 248 g of an amorphous powder. This amorphous powder is confirmed to have the following composition as converted to oxides as a result of an analysis using a fluorescent X-ray analyzing apparatus (RIX2100, made by Rigaku).

| Account | | | |
|---|---|---|---|
| SiO₂ | 34.0% by weight | Fe₂O₃ | 12.6% by weight |
| CaO | 32.1% by weight | TiO₂ | 1.0% by weight |
| Al₂O₃ | 20.7% by weight | SO₃ | 0.5% by weight |
| MgO | 6.0% by weight | Cl | 0.2% by weight |
| P₂O₅ | 2.7% by weight | ZnO | 0.1% by weight |
| | | Others slight | |
| Average particle size: 0.98 µm | | | |
| True specific gravity: 2.756 | | | |
| Specific surface area: 213 m²/g | | | |

Then, 248 parts by weight of the thus obtained amorphous powder is kneaded with 1512 parts by weight of an unfired paper-making sludge, and a pressure of 3 kgf/cm² is applied while transferring the kneaded mass through a conveyor to form a sheet-shaped body having a thickness of 10 mm. The sheet-shaped body is heated at 100°C to form a plate-shaped composite hardened body.

### (Example 1-6)

The fired product obtained in Example 1-1 is pulverized in a ball mill for 10 minutes to obtain 248 g of an amorphous powder. This amorphous powder is confirmed to have the following composition as converted to oxides as a result of an analysis using a fluorescent X-ray analyzing apparatus (RIX2100, made by Rigaku).

| Account | | | |
|---|---|---|---|
| SiO₂ | 34.0% by weight | Fe₂O₃ | 12.6% by weight |
| CaO | 32.1% by weight | TiO₂ | 1.0% by weight |
| Al₂O₃ | 20.7% by weight | SO₃ | 0.5% by weight |
| MgO | 6.0% by weight | Cl | 0.2% by weight |
| P₂O₅ | 2.7% by weight | ZnO | 0.1% by weight |
| | | Others slight | |
| Average particle size: 232 µm | | | |
| True specific gravity: 2.756 | | | |
| Specific surface area: 0.9 m²/g | | | |

Then, 248 parts by weight of the thus obtained amorphous powder is kneaded with 1512 parts by weight of an unfired paper-making sludge, and a pressure of 3 kgf/cm² is applied while transferring the kneaded mass through a conveyor to form a sheet-shaped body having a thickness of 10 mm. The sheet-shaped body is heated at 100°C to form a plate-shaped composite hardened body.

### (Example 1-7)

248 parts by weight of the amorphous powder obtained in Example 1-1 is kneaded with 62 parts by weight of phenolic resin, and a pressure of 3 kgf/cm² is applied while transferring the kneaded mass through a conveyor to form a sheet-shaped body having a thickness of 10 mm. The sheet-shaped body is pressed at a temperature of 110°C under a pressure of 7 kgf/cm² for 20 minutes to obtain a composite hardened body.

### (Example 1-8)

After a sheet-shaped glass fiber is impregnated with a phenolic resin solution added with a curing agent (impregnation amount as a solid content: 45%), it is dried at a temperature of 80°C for 20 minutes to obtain a reinforcing sheet. Then, a sheet-shaped body is prepared in the same manner as in Example 1. Thereafter, the reinforcing sheet is placed on each of front and rear surfaces of the sheet-shaped body and pressed at a temperature of 110°C under a pressure of 7 kgf/cm² for 20 minutes to produce a composite building material consisting of the core material having a thickness of 10 mm and the reinforcing layers laid on the front and rear surfaces thereof and having a thickness of 1 mm. Moreover, a decorative panel of cryptomeria having a thickness of 0.2 mm is adhered to the surface of the composite building material through an adhesive of vinyl acetate.

### (Example 1-9)

This example is fundamentally the same as Example 1-1, except that 1512 g of a paper-making sludge (solid content: 34% by weight, water content: 66% by weight) is dried at 80°C with stirring, and the dried mass is fired at 780°C for 5 hours and immediately quenched to room temperature and then pulverized in a ball mill to obtain an inorganic amorphous powder. Then, 248 kg part of the inorganic amorphous powder is kneaded with 3500 parts by weight of an unfired sludge and 3200 parts by weight of water, and the kneaded mass is shaped into a sheet-shaped body having a thickness of 10 mm while applying a pressure of 75 kgf/cm² (7.35 MPa) by a dehydration press process. The sheet-shaped body is dried by heating at 100°C to obtain a plate-shaped composite hardened body.

### (Example 1-10)

This example is fundamentally the same as Example 2, except that 248 parts by weight of the amorphous powder is kneaded with 3500 parts by weight of an unfired sludge and 3200 parts by weight of water, and the kneaded mass is shaped into a sheet-shaped body having a thickness of 10 mm while applying a pressure of 75 kgf/cm² (7.35 MPa) by a dehydration press process. The sheet-shaped body is dried by heating at 100°C to obtain a plate-shaped composite hardened body.

### (Example 1-11)

This example is fundamentally the same as Example 1-3, except that 248 parts by weight of the inorganic amorphous powder is kneaded with 3500 parts by weight of an unfired sludge and 3200 parts by weight of water, and the kneaded mass is shaped into a plate-shaped composite hardened body in the same manner as in Example 9.

### (Example 1-12)

This example is fundamentally the same as Example 1-4, except that 248 parts by weight of the inorganic amorphous powder is kneaded with 3500 parts by weight of an unfired sludge and 3200 parts by weight of water, and the kneaded mass is shaped into a plate-shaped composite hardened body in the same manner as in Example 9.

### (Example 1-13)

This example is fundamentally the same as Example 1-5, except that 248 parts by weight of the inorganic amorphous powder is kneaded with 3500 parts by weight of an unfired sludge and 3200 parts by weight of water, and the kneaded mass is shaped into a plate-shaped composite hardened body in the same manner as in Example 9.

### (Example 1-14)

This example is fundamentally the same as Example 1-6, except that 248 parts by weight of the inorganic amorphous powder is kneaded with 3500 parts by weight of an unfired sludge and 3200 parts by weight of water, and the kneaded mass is shaped into a plate-shaped composite hardened body in the same manner as in Example 9.

### (Example 1-15)

This example is fundamentally the same as Example 1-7, except that 248 parts by weight of the inorganic amorphous powder is kneaded with 3500 parts by weight of an unfired sludge and 3200 parts by weight of water, and the kneaded mass is shaped into a plate-shaped composite hardened body in the same manner as in Example 9.

### (Example 1-16)

This example is fundamentally the same as Example 1-8, except that the composite hardened body is one used in Example 9.

### (Comparative Example 1-1)

A slurry is prepared by mixing 60 parts by weight of a fired scum fired at 1000°C, 36 parts by weight of water, 100 parts by weight of a cement and 0.3 part by weight of vinylon fibers in a forced agitating mixer for 3 minutes. The slurry is poured into a mold and pressurized under 150-180 kgf/cm² and taken out therefrom. When powder sampled out from the plate-shaped body is subjected to an X-ray diffractometry, only peaks of Gehlenite,syn, Melitite-synthetic, Gehlenite-synthetic, Anorthite,ordered are observed.

### (Comparative Example 1-2)

A fused slug of lime-based sewage sludge (produced by the Osaka Sewerage Public Corporation and having the following main chemical components) is fired at 1500°C and pulverized in a ball mill. 5 parts by weight of the pulverized product having a particle size corresponding to blaine value of 3500 cm²/g is mixed with 95 parts by weight of normal Portland cement (made by Chichibu Onoda Cement Co., Ltd.) and SO₃ amount in the cement is adjusted to 2% by weight by adding natural gypsum to obtain a mixed cement composition. This cement is mixed with sand at a ratio of 1:3 and left to stand for 3 days.

| Account | | | |
|---|---|---|---|
| SiO₂ | 33.4% by weight | MgO | 2.4% by weight |
| Al₂O₃ | 14.2% by weight | P₂O₅ | 7.0% by weight |
| Fe₂O₃ | 5.0% by weight | NaO | 0.7% by weight |
| CaO | 33.9% by weight | K₂O | 0.7% by weight |

With respect to the composite hardened bodies and composite building materials obtained by the above examples and comparative examples, tests are made to measure bending strength, compression strength, workability and nail striking property. The results are shown in Table 1. Moreover, the bending strength is measured according to a method defined in JIS A6901, and the compression strength is measured according to a method defined in JIS A5416, respectively. And also, the workability is judged by subjecting to a cutting work with a circular saw for woodworking. Furthermore, the nail striking property is evaluated by striking a nail of 4 mm in diameter and 50 mm in length to measure a nail embedded depth and presence or absence of crack.

**Table 1**

| | Bending strength (kgf/cm²) | Compression strength (kgf/cm²) | Workability | Nail striking property |
|---|---|---|---|---|
| Example 1-1 | 238 | 851 | cuttable | go through absence of crack |
| Example 1-2 | 220 | 845 | cuttable | go through absence of crack |
| Example 1-3 | 237 | 855 | cuttable | go through absence of crack |
| Example 1-4 | 221 | 840 | cuttable | go through absence of crack |
| Example 1-5 | 248 | 845 | cuttable | go through presence of crack |
| Example 1-6 | 230 | 850 | cuttable | go through presence of crack |
| Example 1-7 | 210 | 817 | cuttable | go through absence of crack |
| Example 1-8 | 473 | 824 | cuttable | go through absence of crack |
| Example 1-9 | 193 | 838 | cuttable | go through absence of crack |
| Example 1-10 | 218 | 851 | cuttable | go through absence of crack |
| Example 1-11 | 206 | 828 | cuttable | go through absence of crack |
| Example 1-12 | 243 | 861 | cuttable | go through absence of crack |
| Example 1-13 | 251 | 874 | cuttable | go through presence of crack |
| Example 1-14 | 175 | 733 | cuttable | go through presence of crack |
| Example 1-15 | 271 | 816 | cuttable | go through absence of crack |
| Example 1-16 | 518 | 840 | cuttable | go through absence of crack |
| Comparative Example 1-1 | 103 | 796 | no cut | go through presence of crack |
| Comparative Example 1-2 | 97 | 753 | no cut | go through presence of crack |

### [Example 2]

### (Example 2-1)

(1) There is provided 1512 g of an unfired paper-making sludge ("Green sludge" handled by Maruto Yozai-sha, solid content: 34% by weight, water content: 66% by weight).
   It is dried at 80°C with stirring, and the dried mass is fired at 780°C for 5 hours and immediately quenched to room temperature at 10°C/min. Further, the fired product is pulverized in a ball mill for 5 hours to obtain 248 parts by weight of an inorganic amorphous powder.
(2) 1512 parts by weight of the unfired paper-making sludge of the item (1) is kneaded with 248 parts by weight of the fired product, and a pressure of 3 kg/cm² is applied while transferring the kneaded mass through a conveyor to form a sheet-shaped body having a thickness of 10 mm.
(3) The sheet-shaped body is heated at 100°C to form a plate-shaped inorganic hardened body.

The inorganic amorphous powder obtained in the above item (1) is confirmed to have the following composition as converted to oxides as a result of an analysis using a fluorescent X-ray analyzing apparatus (RIX2100, made by Rigaku). And also, the measurement of an X-ray diffractometry is conducted to obtain an X-ray diffraction chart shown in Fig. 4. Miniflex made by Rigaku is used in the X-ray diffractometry.

A peak showing a crystal structure is observed on a noise-like base line, whereby it is confirmed to be an amorphous structure. And also, identification of Gehlenite,syn, Melitite-synthetic,
Gehenite,synthetic, Anorthite,ordered is observed from the peaks.

| (Fired product of paper-making sludge) | | | |
|---|---|---|---|
| SiO₂ | 34.0% by weight | MgO | 6.0% by weight |
| Al₂O₃ | 20.7% by weight | P₂O₅ | 2.7% by weight |
| Fe₂O₃ | 12.6% by weight | TiO₂ | 1.0% by weight |
| CaO | 32.1% by weight | SO₃ | 0.5% by weight |
| | | Cl | 0.2% by weight |
| | | ZnO | 0.1% by weight |
| | | Others slight | |
| Average particle size 11.0 µm | | | |
| True specific gravity 2.756 | | | |
| Specific surface area 19.0 m²/g | | | |

### (Example 2-2)

This example is the same as Example 2-1, except that 248 parts by weight of the inorganic amorphous powder pulverized in the ball mill is further pulverized in a ball mill for 10 hours to obtain 248 parts by weight of an inorganic amorphous powder. This powder has the following composition.

| (Fired product of paper-making sludge) | | | |
|---|---|---|---|
| SiO₂ | 34.0% by weight | MgO | 6.0% by weight |
| Al₂O₃ | 20.7% by weight | P₂O₅ | 2.7% by weight |
| Fe₂O₃ | 12.6% by weight | TiO₂ | 1.0% by weight |
| CaO | 32.1% by weight | SO₃ | 0.5% by weight |
| | | Cl | 0.2% by weight |
| | | ZnO | 0.1% by weight |
| | | Others slight | |
| Average particle size 6.6 µm | | | |
| True specific gravity 2.756 | | | |
| Specific surface area 31.6 m²/g | | | |

### (Example 2-3)

This example is the same as Example 2-1, except that 248 parts by weight of the inorganic amorphous powder pulverized in the ball mill is further pulverized in a ball mill for 3 hours to obtain 248 parts by weight of an inorganic amorphous powder. This powder has the following composition.

| (Fired product of paper-making sludge) | | | |
|---|---|---|---|
| SiO₂ | 34.0% by weight | MgO | 6.0% by weight |
| Al₂O₃ | 20.7% by weight | P₂O₅ | 2.7% by weight |
| Fe₂O₃ | 12.6% by weight | TiO₂ | 1.0% by weight |
| CaO | 32.1% by weight | SO₃ | 0.5% by weight |
| | | Cl | 0.2% by weight |
| | | ZnO | 0.1% by weight |
| | | Others slight | |
| Average particle size 17.6 µm | | | |
| True specific gravity 2.756 | | | |
| Specific surface area 30.4 m²/g | | | |

248 parts by weight of the paper-making sludge obtained in Example 2-1 is kneaded with 62 parts by weight of a phenolic resin, and a pressure of 3 kg/cm² is applied while transferring the kneaded mass through a conveyor to form a sheet-shaped body having a thickness of 10 mm.

Furthermore, the sheet-shaped body is pressed at a temperature of 110°C under a pressure of 7 kg/cm² for 20 minutes to obtain a plate-shaped composite hardened body.

### (Example 2-4)

(1) After a sheet-shaped glass fiber is impregnated with a phenolic resin solution added with a curing agent (impregnation amount as a solid content: 45%), it is dried at a temperature of 80°C for 20 minutes to obtain a reinforcing sheet. Further, a phenolic resin is applied onto each of front and rear surfaces of a plate-shaped body and dried at a temperature of 80°C for 20 minutes.
(2) A sheet-shaped body is obtained according to the items (1) and (2) in Example 2-1.
(3) The reinforcing sheet is placed on each of front and rear surfaces of the sheet-shaped body and pressed at a temperature of 110°C under a pressure of 7 kg/cm² for 20 minutes to produce a composite building material consisting of the plate-shaped body having a thickness of 10 mm and the reinforcing layers laid on the front and rear surfaces thereof and having a thickness of 1 mm.
(4) A decorative panel of cryptomeria having a thickness of 0.2 mm is adhered to the surface of the composite building material through an adhesive of vinyl acetate.

### (Example 2-5)

This example is the same as in Example 2-4, except that a copper foil having a thickness of 12 µm is adhered through an adhesive of vinyl acetate instead of the decorative panel.

### (Example 2-6)

This example is fundamentally the same as in Example 2-1, except that 2300 parts by weight of the unfired paper-making sludge in Example 2-1 is kneaded with 248 parts by weight of the fired product of the paper-making sludge and 4500 parts by weight of water to form a slurry, and the slurry is shaped into a sheet-shaped body having a thickness of 10 mm while applying a pressure of 30 kg/cm² (2.9 MPa) by a dehydration press process.

### (Example 2-7)

This example is fundamentally the same as in Example 2-3, except that 200 parts by weight of the fired paper-making sludge in Example 2-1 is kneaded with 62 parts by weight of a phenolic resin and 1300 parts by weight of water to form a kneaded mass. The kneaded mass is transferred through a conveyor and shaped into a sheet-shaped body having a thickness of 10 mm while applying a pressure of 3 kg/cm² (0.29 MPa).

The sheet-shaped body is further pressed at a temperature of 110°C under a pressure of 7 kg/cm² (0.68 MPa) for 20 minutes to obtain a composite hardened body.

### (Example 2-8)

This example is the same as Example 2-1, except that 248 parts by weight of the inorganic amorphous powder pulverized in the ball mill is further pulverized in a ball mill for 10 minutes to obtain 248 parts by weight of an inorganic amorphous powder. This powder has the following composition.

| (Fired product of paper-making sludge) | | | |
|---|---|---|---|
| SiO₂ | 34.0% by weight | MgO | 6.0% by weight |
| Al₂O₃ | 20.7% by weight | P₂O₅ | 2.7% by weight |
| Fe₂O₃ | 12.6% by weight | TiO₂ | 1.0% by weight |
| CaO | 32.1% by weight | SO₃ | 0.5% by weight |
| | | Cl | 0.2% by weight |
| | | ZnO | 0.1% by weight |
| | | Others slight | |
| Average particle size 139 µm | | | |
| True specific gravity 2.756 | | | |
| Specific surface area 1.5 m²/g | | | |

### (Example 2-9)

This example is the same as Example 2-1, except that 248 parts by weight of the inorganic amorphous powder pulverized in the ball mill is further pulverized in a ball mill for 20 hours to obtain 248 parts by weight of an inorganic amorphous powder. This powder has the following composition.

| (Fired product of paper-making sludge) | | | |
|---|---|---|---|
| SiO₂ | 34.0% by weight | MgO | 6.0% by weight |
| Al₂O₃ | 20.7% by weight | P₂O₅ | 2.7% by weight |
| Fe₂O₃ | 12.6% by weight | TiO₂ | 1.0% by weight |
| CaO | 32.1% by weight | SO₃ | 0.5% by weight |
| | | Cl | 0.2% by weight |
| | | ZnO | 0.1% by weight |
| | | Others slight | |
| Average particle size 1.02 µm | | | |
| True specific gravity 2.756 | | | |
| Specific surface area 205 m²/g | | | |

### (Comparative Example 2-1)

A slurry is prepared by mixing 60 parts by weight of a fired scum fired at 1000°C, 36 parts by weight of water, 100 parts by weight of a cement and 0.3 part by weight of vinylon fibers in a forced agitating mixer for 3 minutes. The slurry is poured into a mold and pressurized under 150-180 kg/cm² and taken out therefrom.

### (Comparative Example 2-2)

A fused slug of lime-based sewage sludge (produced by the Osaka Sewerage Public Corporation and having the following main chemical components, fired at 1500°C) is pulverized in a ball mill to obtain a pulverized product having a particle size corresponding to a blaine value of 3500 cm²/g.

5 parts by weight of the pulverized product is mixed with 95 parts by weight of normal Portland cement (made by Chichibu Onoda Cement Co., Ltd.) and SO₃ amount in the cement is adjusted to 2% by weight by adding natural gypsum to obtain a mixed cement composition.

| | | | |
|---|---|---|---|
| SiO₂ | 33.4% by weight | MgO | 2.4% by weight |
| Al₂O₃ | 14.2% by weight | P₂O₅ | 7.0% by weight |
| Fe₂O₃ | 5.0% by weight | NaO | 0.7% by weight |
| CaO | 33.9% by weight | K₂O | 0.7% by weight |

This cement is mixed with sand at a ratio of 1:3 and left to stand for 3 days.

With respect to the composite hardened bodies and composite building materials obtained in the examples and comparative examples, tests are made to measure bending strength, compression strength, workability and nail striking property. The results are shown in Table 1.

Moreover, measurement of powders of Comparative Examples 2-1 and 2-2 by an X-ray diffractometry is conducted. Comparative Example 2-1 is fired at 1000°C, and Comparative Example 2-2 is fired at 1500°C, so that only peaks of Gehlenite,syn, Melilite-synthetic, Gehenite,synthetic, Anorthite,ordwered are observed by the X-ray diffractometry.

And also, with respect to the composite hardened bodies and composite building materials obtained in the examples and comparative examples, tests are made to measure bending strength, compression strength, workability and nail striking property. The results are shown in Table 2. Moreover, the bending strength is measured according to a method defined in JIS A6901, and the compression strength is measured according to a method defined in JIS A5416, respectively. And also, the workability is judged by subjecting to a cutting work with a circular saw for woodworking. Furthermore, the nail striking property is evaluated by striking a nail of 4 mm in diameter and 50 mm in length to measure a nail embedded depth and presence or absence of crack. As to the coloring property, spotted pattern clearly observed by visibility is unacceptable.

**Table 2**

| | Bending strength (kgf/cm²) | Compression strength (kgf/cm²) | Workability | Nail striking property | Coloring property |
|---|---|---|---|---|---|
| Example 2-1 | 238 | 851 | cuttable | go through absence of crack | good |
| Example 2-2 | 220 | 845 | cuttable | go through absence of crack | good |
| Example 2-3 | 182 | 817 | cuttable | go through absence of crack | good |
| Example 2-4 | 529 | 801 | cuttable | go through absence of crack | good |
| Example 2-5 | 529 | 801 | cuttable | go through absence of crack | good |
| Example 2-6 | 172 | 736 | cuttable | go through absence of crack | good |
| Example 2-7 | 385 | 815 | cuttable | go through absence of crack | good |
| Example 2-8 | 100 | 720 | cuttable | go through presence of crack | good |
| Example 2-9 | 95 | 730 | cuttable | go through presence of crack | unacceptable |
| Comparative Example 2-1 | 95 | 730 | no cut | go through presence of crack | - |
| Comparative Example 2-2 | 97 | 753 | no cut | go through presence of crack | - |

### [Example 3]

### (Example 3-1)

(1) There is provided 1512 parts by weight of an unfired paper-making sludge ("Green sludge" handled by Maruto Yozai-sha, solid content: 34% by weight, water content: 66% by weight) having the following composition.
   It is dried at 80°C with stirring, and the dried mass is fired at 780°C for 5 hours, and immediately quenched to room temperature. Further, the fired product is pulverized in a ball mill to obtain 248 parts by weight of an inorganic amorphous powder.
(2) 1512 parts by weight of the unfired paper-making sludge in the item (1) is kneaded with 248 parts by weight of the fired product and a pressure of 3 kgf/cm² is applied while transferring the kneaded mass through a conveyor to form a sheet-shaped body having a thickness of 10 mm.
(3) The sheet-shaped body is heated at 100°C to form a plate-shaped inorganic hardened body.

The inorganic amorphous powder obtained in the item (1) is confirmed to have the following composition as converted to oxides as a result of an analysis using a fluorescent X-ray analyzing apparatus (RIX2100, made by Rigaku). And also, the measurement of an X-ray diffractometry is conducted to obtain an X-ray diffraction chart shown in Fig. 4. Miniflex made by Rigaku is used in the X-ray diffractometry.

A peak showing a crystal structure is observed on a noise-like base line, whereby it is confirmed to be an amorphous structure. And also, identification of Gehlenite,syn, Melitite-synthetic, Gehenite,synthetic, Anorthite,ordered is observed from the peaks.

| (Fired product of paper-making sludge) | | | |
|---|---|---|---|
| SiO₂ | 34.0% by weight | MgO | 6.0% by weight |
| Al₂O₃ | 20.8% by weight | P₂O₅ | 2.7% by weight |
| Fe₂O₃ | 1.6% by weight | TiO₂ | 1.0% by weight |
| CaO | 32.1% by weight | SO₃ | 0.2% by weight |
| | | Cl | 0.1% by weight |
| | | ZnO | 0.1% by weight |
| | | Others slight | |
| Average particle size 11.0 µm | | | |
| True specific gravity 2.756 | | | |
| Specific surface area 19.0 m²/g | | | |

### (Example 3-2)

(1) 248 parts by weight of the fired product of the paper-making sludge obtained in Example 3-1 is kneaded with 62 parts by weight of a phenolic resin, and a pressure of 3 kgf/cm² is applied while transferring the kneaded mass through a conveyor to form a sheet-shaped body having a thickness of 10 mm.

Furthermore, it is pressed at a temperature of 110°C under a pressure of 7 kg/cm² for 20 minutes to obtain a composite hardened body. (Example 3-3)
(1) After a sheet-shaped glass fiber is impregnated with a phenolic resin solution added with a curing agent (impregnation amount as a solid content: 45%), it is dried at a temperature of 80°C for 20 minutes to obtain a reinforcing sheet. Further, a phenolic resin is applied onto each of front and rear surfaces of a plate-shaped body and dried at a temperature of 80°C for 20 minutes.
(2) A sheet-shaped body is obtained according to the items (1) and (2) in Example 3-1.
(3) The reinforcing sheet is placed on each of front and rear surfaces of the sheet-shaped body and pressed at a temperature of 110°C under a pressure of 7 kg/cm² for 20 minutes to produce a composite building material consisting of the plate-shaped body having a thickness of 16 mm and the reinforcing layers laid on the front and rear surfaces thereof and having a thickness of 1 mm.
(4) A decorative panel of cryptomeria having a thickness of 0.2 mm is adhered to the surface of the composite building material through an adhesive of vinyl acetate.

### (Example 3-4)

This example is the same as in Example 3-1, except that 1800 parts by weight of the unfired paper-making sludge in Example 3-1 is kneaded with 248 parts by weight of the fired product of the paper-making sludge and 5500 parts by weight of water to form a slurry, and the slurry is shaped into a sheet-shaped body having a thickness of 15 mm while applying a pressure of 50 kgf/cm² (4.9 MPa) by a dehydration press process. The sheet-shaped body is dried by heating at 100°C to obtain a plate-shaped composite hardened body

### (Example 3-5)

This example is fundamentally the same as in Example 3-2, except that 248 parts by weight of the fired paper-making sludge in Example 3-2 is kneaded with 62 parts by weight of a phenolic resin and 1000 parts by weight of water to form a slurry, and the slurry is shaped into a sheet-shaped body having a thickness of 10 mm while applying a pressure of 25 kg/cm² (2.45 MPa).

The sheet-shaped body is further pressed at a temperature of 150°C under a pressure of 7 kg/cm² (0.69 MPa) for 20 minutes to obtain a composite hardened body.

### (Comparative Example 3-1)

A slurry is prepared by mixing 60 parts by weight of a fired scum fired at 1000°C, 36 parts by weight of water, 100 parts by weight of a cement and 0.3 part by weight of vinylon fibers in a forced agitating mixer for 3 minutes. The slurry is poured into a mold and pressurized under 150-180 kgf/cm² and taken out therefrom.

### (Comparative Example 3-2)

A fused slug of lime-based sewage sludge (produced by the Osaka Sewerage Public Corporation and having the following main chemical components, fired at 1500°C) is pulverized in a ball mill to obtain a pulverized product having a particle size corresponding to a blaine value of 3500 cm²/g.

5 parts by weight of the pulverized product is mixed with 95 parts by weight of normal Portland cement (made by Chichibu Onoda Cement Co., Ltd.) and SO₃ amount in the cement is adjusted to 2% by weight by adding natural gypsum to obtain a mixed cement composition.

| | | | |
|---|---|---|---|
| SiO₂ | 33.4% by weight | MgO | 2.4% by weight |
| Al₂O₃ | 14.2% by weight | P₂O₅ | 7.0% by weight |
| Fe₂O₃ | 5.0% by weight | NaO | 0.7% by weight |
| CaO | 33.9% by weight | K₂O | 0.7% by weight |

This cement is mixed with sand at a ratio of 1:3 and left to stand for 3 days.

With respect to the composite hardened bodies and composite building materials obtained in the examples and comparative examples, tests are made to measure bending strength, compression strength, workability and nail striking property. The results are shown in Table 3.

Moreover, measurement of powders of Comparative Examples 3-1 and 3-2 by an X-ray diffractometry is conducted. Comparative Example 3-1 is fired at 1000°C, and Comparative Example 3-2 is fired at 1500°C, so that only peaks of Gehlenite,syn, Melilite-synthetic, Gehenite,synthetic, Anorthite,ordwered are observed by the X-ray diffractometry.

The bending strength is measured according to a method defined in JIS A6901, and the compression strength is measured according to a method defined in JIS A5416, respectively. And also, the workability is judged by subjecting to a cutting work with a circular saw for woodworking. Furthermore, the nail striking property is evaluated by striking a nail of 4 mm in diameter and 50 mm in length to measure a nail embedded depth and presence or absence of crack.

**Table 3**

| | Bending strength (kgf/cm²) | Compression strength (kgf/cm²) | Workability | Nail striking property |
|---|---|---|---|---|
| Example 3-1 | 238 | 851 | cuttable | go through absence of crack |
| Example 3-2 | 210 | 817 | cuttable | go through absence of crack |
| Example 3-3 | 635 | 838 | cuttable | go through absence of crack |
| Example 3-4 | 183 | 830 | cuttable | go through absence of crack |
| Example 3-5 | 296 | 785 | cuttable | go through absence of crack |
| Comparative Example 3-1 | 103 | 796 | no cut | go through presence of crack |
| Comparative Example 3-2 | 97 | 753 | no cut | go through presence of crack |

### [Example 4]

### (Example 4-1)

1512 g of an unfired paper-making sludge ("Green sludge" handled by Maruto Yozai-sha, solid content: 34% by weight, water content: 66% by weight) is dried at 80°C with stirring, and the dried mass is fired at 780°C for 5 hours and immediately quenched to room temperature. Further the fired product is pulverized in a ball mill for 5 hours to obtain 248 g of an amorphous powder.

The amorphous powder is confirmed to have the following composition as converted to oxides as a result of an analysis using a fluorescent X-ray analyzing apparatus (RIX2100, made by Rigaku). Moreover, the specific surface area is measured according to JIS R-1626 (BET method: one-point process of fluidization method).

| Account | | | |
|---|---|---|---|
| SiO₂ | 34.1% by weight | Fe₂O₃ | 1.6% by weight |
| CaO | 32.1% by weight | TiO₂ | 1.0% by weight |
| Al₂O₃ | 20.7% by weight | SO₃ | 0.5% by weight |
| MgO | 5.9% by weight | Cl | 0.2% by weight |
| P₂O₅ | 2.8% by weight | ZnO | 0.1% by weight |
| | | Others slight | |
| Average particle size: 11.0 µm | | | |
| True specific gravity: 2.756 | | | |
| Specific surface area: 19.0 m²/g | | | |

And also, the crystalline structure is confirmed by an X-ray diffractometry. The X-ray diffraction chart is shown in Fig. 4. Moreover, the X-ray diffractometry is carried out by using MiniFlex made by Rigaku and Cu as a target. It is ascertained that the crystalline structure is included in the amorphous structure because a gentle undulation (harrow) is observed about 2θ: 22° and a peak indicating the crystalline structure is also observed. And also, Gehlenite,syn, Melitite-synthetic, Gehlenite-synthetic, Anorthite,ordered are identified from the peaks. The existing content of crystal is about 20% by weight to the powder.

Then, 248 parts by weight of the thus obtained amorphous powder is kneaded with 1512 parts by weight of an unfired paper-making sludge, and a pressure of 35 kgf/cm² is applied while transferring the kneaded body through a conveyor to form a sheet-shaped body having a thickness of 10 mm. The sheet-shaped body is heated at 100°C to form a plate-shaped composite hardened body.

Moreover, when a side face of the composite hardened body is observed by means of an optical microscope (50 magnification), the fibers are oriented in a direction perpendicular to the pressure applying direction.

### (Example 4-2)

The fired product obtained in Example 4-1 is pulverized in a ball mill for 10 hours to obtain 248 g of an amorphous powder. This amorphous powder is confirmed to have the following composition as converted to oxides as a result of an analysis using a fluorescent X-ray analyzing apparatus (RIX2100, made by Rigaku).

| Account | | | |
|---|---|---|---|
| SiO₂ | 34.1% by weight | Fe₂O₃ | 1.6% by weight |
| CaO | 32.1% by weight | TiO₂ | 1.0% by weight |
| Al₂O₃ | 20.7% by weight | SO₃ | 0.5% by weight |
| MgO | 5.9% by weight | Cl | 0.2% by weight |
| P₂O₅ | 2.8% by weight | ZnO | 0.1% by weight |
| | | Others slight | |
| Average particle size: 6.6 µm | | | |
| True specific gravity: 2.756 | | | |
| Specific surface area: 31.7 m²/g | | | |

Then, 248 parts by weight of the thus obtained amorphous powder is kneaded with 1512 parts by weight of an unfired paper-making sludge, and a pressure of 35 kgf/cm² is applied while transferring the kneaded mass through a conveyor to form a sheet-shaped body having a thickness of 10 mm. The sheet-shaped body is heated at 100°C to form a plate-shaped composite hardened body.

### (Example 4-3)

The fired product obtained in Example 4-1 is pulverized in a ball mill for 3 hours to obtain 248 g of an amorphous powder. This amorphous powder is confirmed to have the following composition as converted to oxides as a result of an analysis using a fluorescent X-ray analyzing apparatus (RIX2100, made by Rigaku).

| Account | | | |
|---|---|---|---|
| SiO₂ | 34.0% by weight | Fe₂O₃ | 12.6% by weight |
| CaO | 32.1% by weight | TiO₂ | 1.0% by weight |
| Al₂O₃ | 20.7% by weight | SO₃ | 0.5% by weight |
| MgO | 6.0% by weight | Cl | 0.2% by weight |
| P₂O₅ | 2.7% by weight | ZnO | 0.1% by weight |
| | | Others slight | |
| Average particle size: 17.6 µm | | | |
| True specific gravity: 2.756 | | | |
| Specific surface area: 4.8 m²/g | | | |

Then, 248 parts by weight of the thus obtained amorphous powder is kneaded with 1512 parts by weight of an unfired paper-making sludge, and a pressure of 50 kgf/cm² is applied while transferring the kneaded mass through a conveyor to form a sheet-shaped body having a thickness of 10 mm. The sheet-shaped body is heated at 100°C to form a plate-shaped composite hardened body.

### (Example 4-4)

The amorphous powder obtained by pulverizing in the ball mill in Example 4-1 is further pulverized in a ball mill for 30 hours to obtain 248 g of an amorphous powder. This amorphous powder is confirmed to have the following composition as converted to oxides as a result of an analysis using a fluorescent X-ray analyzing apparatus (RIX2100, made by Rigaku).

| Account | | | |
|---|---|---|---|
| SiO₂ | 34.0% by weight | Fe₂O₃ | 12.6% by weight |
| CaO | 32.1% by weight | TiO₂ | 1.0% by weight |
| Al₂O₃ | 20.7% by weight | SO₃ | 0.5% by weight |
| MgO | 6.0% by weight | Cl | 0.2% by weight |
| P₂O₅ | 2.7% by weight | ZnO | 0.1% by weight |
| | | Others slight | |
| Average particle size: 1.5 µm | | | |
| True specific gravity: 2.756 | | | |
| Specific surface area: 139 m²/g | | | |

Then, 248 parts by weight of the thus obtained amorphous powder is kneaded with 1512 parts by weight of an unfired paper-making sludge, and a pressure of 3 kgf/cm² is applied while transferring the kneaded mass through a conveyor to form a sheet-shaped body having a thickness of 10 mm. The sheet-shaped body is heated at 100°C to form a plate-shaped composite hardened body.

### (Example 4-5)

The amorphous powder obtained by pulverizing in the ball mill in Example 4-1 is further pulverized in a ball mill for 48 hours to obtain 248 g of an amorphous powder. This amorphous powder is confirmed to have the following composition as converted to oxides as a result of an analysis using a fluorescent X-ray analyzing apparatus (RIX2100, made by Rigaku).

| Account | | | |
|---|---|---|---|
| SiO₂ | 34.0% by weight | Fe₂O₃ | 12.6% by weight |
| CaO | 32.1% by weight | TiO₂ | 1.0% by weight |
| Al₂O₃ | 20.7% by weight | SO₃ | 0.5% by weight |
| MgO | 6.0% by weight | Cl | 0.2% by weight |
| P₂O₅ | 2.7% by weight | ZnO | 0.1% by weight |
| | | Others slight | |
| Average particle size: 0.98 µm | | | |
| True specific gravity: 2.756 | | | |
| Specific surface area: 213 m²/g | | | |

Then, 248 parts by weight of the thus obtained amorphous powder is kneaded with 1512 parts by weight of an unfired paper-making sludge, and a pressure of 3 kgf/cm² is applied while transferring the kneaded mass through a conveyor to form a sheet-shaped body having a thickness of 10 mm. The sheet-shaped body is heated at 100°C to form a plate-shaped composite hardened body.

### (Example 4-6)

The fired product obtained in Example 4-1 is pulverized in a ball mill for 10 minutes to obtain 248 g of an amorphous powder. This amorphous powder is confirmed to have the following composition as converted to oxides as a result of an analysis using a fluorescent X-ray analyzing apparatus (RIX2100, made by Rigaku).

| Account | | | |
|---|---|---|---|
| SiO₂ | 34.0% by weight | Fe₂O₃ | 12.6% by weight |
| CaO | 32.1% by weight | TiO₂ | 1.0% by weight |
| Al₂O₃ | 20.7% by weight | SO₃ | 0.5% by weight |
| MgO | 6.0% by weight | Cl | 0.2% by weight |
| P₂O₅ | 2.7% by weight | ZnO | 0.1% by weight |
| | | Others slight | |
| Average particle size: 232 µm | | | |
| True specific gravity: 2.756 | | | |
| Specific surface area: 0.9 m²/g | | | |

Then, 248 parts by weight of the thus obtained amorphous powder is kneaded with 1512 parts by weight of an unfired paper-making sludge, and a pressure of 3 kgf/cm² is applied while transferring the kneaded mass through a conveyor to form a sheet-shaped body having a thickness of 10 mm. The sheet-shaped body is heated at 100°C to form a plate-shaped composite hardened body.

### (Example 4-7)

248 parts by weight of the amorphous powder obtained in Example 4-1 is kneaded with 62 parts by weight of phenolic resin, and a pressure of 3 kgf/cm² is applied while transferring the kneaded mass through a conveyor to form a sheet-shaped body having a thickness of 10 mm. The sheet-shaped body is pressed at a temperature of 180°C under a pressure of 28 kgf/cm² for 20 minutes to obtain a composite hardened body.

### (Example 4-8)

After a sheet-shaped glass fiber is impregnated with a phenolic resin solution added with a curing agent (impregnation amount as a solid content: 45%), it is dried at a temperature of 80°C for 20 minutes to obtain a reinforcing sheet. Then, a sheet-shaped body is prepared in the same manner as in Example 4-1. Thereafter, the reinforcing sheet is placed on each of front and rear surfaces of the sheet-shaped body and pressed at a temperature of 110°C under a pressure of 7 kgf/cm² for 20 minutes to produce a composite building material consisting of the core material having a thickness of 10 mm and the reinforcing layers laid on the front and rear surfaces thereof and having a thickness of 1 mm. Moreover, a decorative panel of cryptomeria having a thickness of 0.2 mm is adhered to the surface of the composite building material through an adhesive of vinyl acetate.

### (Comparative Example 4-1)

A slurry is prepared by mixing 60 parts by weight of a fired scum fired at 1000°C, 36 parts by weight of water, 100 parts by weight of a cement and 0.3 part by weight of vinylon fibers in a forced agitating mixer for 3 minutes. The slurry is poured into a mold and pressurized under 150-180 kgf/cm² and taken out therefrom. When powder sampled out from the plate-shaped body is subjected to an X-ray diffractometry, only peaks of Gehlenite,syn, Melitite-synthetic, Gehlenite-synthetic, Anorthite,ordered are observed.

### (Comparative Example 4-2)

A fused slug of lime-based sewage sludge (produced by the Osaka Sewerage Public Corporation and having the following main chemical components) is fired at 1500°C and pulverized in a ball mill. 5 parts by weight of the pulverized product having a particle size corresponding to blaine value of 3500 cm²/g is mixed with 95 parts by weight of normal Portland cement (made by Chichibu Onoda Cement Co., Ltd.) and SO₃ amount in the cement is adjusted to 2% by weight by adding natural gypsum to obtain a mixed cement composition. This cement is mixed with sand at a ratio of 1:3 and left to stand for 3 days.

| Account | | | |
|---|---|---|---|
| SiO₂ | 33.4% by weight | MgO | 2.4% by weight |
| Al₂O₃ | 14.2% by weight | P₂O₅ | 7.0% by weight |
| Fe₂O₃ | 5.0% by weight | NaO | 0.7% by weight |
| CaO | 33.9% by weight | K₂O | 0.7% by weight |

With respect to the composite hardened bodies and composite building materials obtained by the above examples and comparative examples, tests are made to measure bending strength, compression strength, workability and nail striking property. The results are shown in Table 4. Moreover, the bending strength is measured according to a method defined in JIS A6901, and the compression strength is measured according to a method defined in JIS A5416, respectively. And also, the workability is judged by subjecting to a cutting work with a circular saw for woodworking. Furthermore, the nail striking property is evaluated by striking a nail of 4 mm in diameter and 50 mm in length to measure a nail embedded depth and presence or absence of crack.

**Table 4**

| | Bending strength (kgf/cm²) | Compression strength (kgf/cm²) | Workability | Nail striking property |
|---|---|---|---|---|
| Example 4-1 | 238 | 851 | cuttable | go through absence of crack |
| Example 4-2 | 220 | 845 | cuttable | go through absence of crack |
| Example 4-3 | 237 | 855 | cuttable | go through absence of crack |
| Example 4-4 | 221 | 840 | cuttable | go through absence of crack |
| Example 4-5 | 138 | 845 | cuttable | go through presence of crack |
| Example 4-6 | 173 | 850 | cuttable | go through presence of crack |
| Example 4-7 | 427 | 817 | cuttable | go through absence of crack |
| Example 4-8 | 483 | 795 | cuttable | go through absence of crack |
| Comparative Example 4-1 | 103 | 796 | no cut | go through presence of crack |
| Comparative Example 4-2 | 97 | 753 | no cut | go through presence of crack |

### INDUSTRIAL APPLICABILITY

As mentioned above, the composite hardened bodies produced by using the amorphous powder according to the invention are cheap materials being excellent in the workability and productivity and having a high bending strength, so that it is possible to advantageously apply them in various fields. Especially, since the nail may be struck, the invention can provide a raw material most suitable for building materials in a low cost.

## Claims

1. Amorphous powder **characterized by** including an amorphous body of two or more oxides.

2. Amorphous powder according to claim 1, wherein the oxide is Al₂O₃, SiO₂, CaO, Na₂O, MgO, P₂O₅, SO₃, K₂O, TiO₂, MnO, Fe₂O₃ or ZnO.

3. Amorphous powder **characterized by** comprising an amorphous body including at least two elements selected from Al, Si, Ca, Na, Mg, P, S, K, Ti, Mn, Fe and Zn.

4. Amorphous powder according to claim 1, 2 or 3, wherein a specific surface area of the powder is 1.6-200 m²/g.

5. Amorphous powder **characterized by** including an Al₂O₃-SiO₂-CaO based amorphous body.

6. Amorphous powder **characterized by** including an Al₂O₃-SiO₂-CaO-oxide based amorphous body.

7. Amorphous powder according to claim 6, wherein the oxide is at least one selected from Na₂O, MgO, P₂O₅, SO₃, K₂O, TiO₂, MnO, Fe₂O₃ and ZnO.

8. Amorphous powder according to any one of claims 1 to 7, wherein the amorphous body has a composition converted into each of Al₂O₃, SiO₂ and CaO that Al₂O₃: 5-51% by weight per total weight of the amorphous powder, SiO₂: 8-53% by weight per total weight of the amorphous powder and CaO: 10-63% by weight per total weight of the amorphous powder, and a sum of three oxides does not exceeds 100% by weight.

9. Amorphous powder according to any one of claims 1 to 8, which further contains a halogen.

10. Amorphous powder according to any one of claims 1 to 9, which further has a crystal body.

11. Amorphous powder **characterized by** including an amorphous body in which at least two elements selected from Al, Si, Ca, Na, Mg, P, S, K, Ti, Mn, Fe and Zn are confirmed to be existent by a fluorescent X-ray analysis and a harrow is observed within a range of 2θ: 15°-40° by an X-ray diffraction analysis.

12. Amorphous powder **characterized by** comprising an amorphous body in which Al, Si and Ca are confirmed to be existent by a fluorescent X-ray analysis and a harrow is observed within a range of 2θ: 15°-40° by an X-ray diffraction analysis.

13. Amorphous powder **characterized by** comprising an amorphous body in which Al, Si and Ca are confirmed to be existent by a fluorescent X-ray analysis and further at least one element selected from Na, Mg, P, S, K, Ti, Mn, Fe and Zn is confirmed to be existent by the fluorescent X-ray analysis and a harrow is observed within a range of 2θ: 15°-40° by an X-ray diffraction analysis.

14. Amorphous powder **characterized by** firing a paper-making sludge as an industrial waste.

15. Amorphous powder **characterized by** firing a paper-making sludge as an industrial waste at not lower than 300°C but lower than 800°C.

16. A composite hardened body comprising amorphous powder as claimed in any one of claims 1 to 15 and a binder.

17. A composite hardened body comprising amorphous powder as claimed in any one of claims 1 to 15, a binder and fibrous materials.

18. A composite hardened body according to claim 17, wherein the fibrous material is an organic fibrous material consisting of a polysaccharide.

19. A composite hardened body according to any one of claims 1 to 18, which further contains inorganic powder.

20. A composite building material comprising a reinforcing layer formed on at least one surface of a core material, in which a composite hardened body as claimed in any one of claims 16 to 19 is applied to said core material.

21. Inorganic amorphous powder consisting of an inorganic amorphous body, wherein the inorganic amorphous body contains Fe and has a specific surface area of 1.6-200 m²/g.

22. Inorganic amorphous powder according to claim 21, wherein a content of Fe in the inorganic amorphous body is 0.1-30% by weight per total weight of the inorganic amorphous powder as converted to Fe₂O₃.

23. Inorganic amorphous powder according to claim 22, wherein the inorganic amorphous powder is used as a coloring matter.

24. Inorganic amorphous powder according to any one of claims 21 to 23, wherein the inorganic amorphous body contains at least two elements selected from Al, Si, Ca, Na, Mg, P, S, K, Ti, Mn and Zn.

25. Inorganic amorphous powder according to any one of claims 21 to 24, wherein the inorganic amorphous body consists of two or more oxides, and the oxide is at least one selected from Na₂O, MgO, P₂O₅, SO₃, K₂O, TiO₂, MnO, Fe₂O₃ and ZnO.

26. Inorganic amorphous powder according to any one of claims 21 to 25, wherein the inorganic amorphous body has a specific gravity of 2.2-3.0.

27. Inorganic amorphous powder according to any one of claims 21 to 26, wherein the inorganic amorphous body has the following composition converted into each of Al₂O₃, SiO₂ and CaO.
Al₂O₃: 5-51% by weight per total weight of the inorganic amorphous powder,
SiO₂: 8-53% by weight per total weight of the inorganic amorphous powder,
CaO: 10-63% by weight per total weight of the inorganic amorphous powder,
provided that a sum of Al₂O₃, SiO₂ and CaO does not exceeds 100% by weight.

28. Inorganic amorphous powder according to any one of claims 21 to 27, wherein the inorganic amorphous body is obtained by firing a paper-making sludge as an industrial waste.

29. Inorganic amorphous powder according to any one of claims 21 to 28, which further contains a halogen.

30. A composite hardened body comprising inorganic amorphous powder as claimed in any one of claims 21 to 29 and a binder.

31. A composite hardened body comprising inorganic amorphous powder as claimed in any one of claims 21 to 29, a binder and fibrous materials.

32. A composite hardened body according to claim 31, wherein the fibrous materials are organic fibrous materials consisting of a polysaccharide.

33. A composite hardened body according to claim 31 or 32, wherein the fibrous materials are oriented in a particular direction.

34. A composite building material comprising a reinforcing layer formed on at least one surface of a core material, in which the core material consists of a composite hardened body as claimed in any one of claims 30 to 33.

35. Inorganic amorphous powder comprising an inorganic amorphous body, in which a crystal body is included in the inorganic amorphous body.

36. Inorganic amorphous powder comprising an inorganic amorphous body, in which a crystal body containing Ca is included in the inorganic amorphous body.

37. Inorganic amorphous powder according to claim 35 or 36, wherein a specific surface area of the inorganic amorphous powder is 1.6-200 m²/g.

38. Inorganic amorphous powder according to any one of claims 35 to 37, wherein the inorganic amorphous body contains at least two or more elements selected from Al, Si, Ca, Na, Mg, P, S, K, Ti, Mn, Fe and Zn.

39. Inorganic amorphous powder according to any one of claims 35 to 38, wherein the inorganic amorphous body consists of two or more oxides, and the oxide is selected from Al₂O₃, SiO₂, CaO, Na₂O, MgO, P₂O₅, SO₃, K₂O, TiO₂, MnO, Fe₂O₃ and ZnO.

40. Inorganic amorphous powder according to any one of claims 35 to 39, wherein the inorganic amorphous powder has a specific gravity of 2.2-3.0.

41. Inorganic amorphous body according to any one of claims 35 to 40, wherein the inorganic amorphous body has the following composition converted into each of Al₂O₃, SiO₂ and CaO.
Al₂O₃: 5-51% by weight per total weight of the inorganic amorphous powder,
SiO₂: 8-53% by weight per total weight of the inorganic amorphous powder,
CaO: 10-63% by weight per total weight of the inorganic amorphous powder,
provided that a sum of Al₂O₃, SiO₂ and CaO does not exceeds 100% by weight.

42. Inorganic amorphous powder according to any one of claims 35 to 41, wherein the inorganic amorphous body contains a halogen.

43. A composite hardened body comprising inorganic amorphous powder as claimed in any one of claims 35 to 42 and a binder.

44. A composite hardened body comprising inorganic amorphous powder as claimed in any one of claims 35 to 42, a binder and fibrous materials.

45. A composite hardened body according to claim 44, wherein the fibrous materials are organic fibrous materials consisting of a polysaccharide.

46. A composite hardened body according to claim 44 or 45, wherein the fibrous materials are oriented in a particular direction.

47. A composite building material comprising a reinforcing layer formed on at least one surface of a core material, in which the core material is a composite hardened body as claimed in any one of claims 43 to 46.

48. Amorphous powder comprising porous powder including an inorganic amorphous body and having a specific surface area of 1.6-200 m²/g.

49. Amorphous powder comprising porous powder including an inorganic amorphous body comprised of two or more oxides and having a specific surface area of 1.6-200 m²/g.

50. A composite hardened body comprising amorphous powder as claimed in claim 48 or 49 and a binder.

51. A composite hardened body comprising amorphous powder as claimed in claim 48 or 49, a binder and fibrous materials.

52. A composite hardened body according to claim 51, wherein the fibrous materials are oriented.

53. A composite building material comprising a reinforcing layer formed on at least one surface of a core material, in which a composite hardened body as claimed in any one of claims 50 to 52 is applied to said core material.
